# EUROPÄISCHE PATENTSCHRIFT

(11) **EP 1 243 060 B1**
(45) Veröffentlichungstag und Bekanntmachung des Hinweises auf die Patenterteilung: **08.10.2003**
(21) Anmeldenummer: 00985190.8
(22) Anmeldetag: 18.12.2000
(51) Int. Cl.: H02H 3/20

(54) **VERFAHREN UND VORRICHTUNG ZUM ÜBERSPANNUNGSSCHUTZ IN ZWEISPANNUNGSBORDNETZEN**
METHOD AND DEVICE FOR OVERVOLTAGE PROTECTION IN DUAL-VOLTAGE VEHICLE ELECTRICAL SYSTEMS
PROCEDE ET DISPOSITIF DE PROTECTION CONTRE LES SURTENSIONS DANS DES RESEAUX DE BORD A DEUX TENSIONS

(30) Priorität: 20.12.1999 DE 19961435
(43) Veröffentlichungstag der Anmeldung: 25.09.2002
(73) Patentinhaber: Volkswagen AG, 38436 Wolfsburg (DE)
(72) Erfinder: ERTZSÄNGER, Frank, 38442 Wolfsburg (DE); ZAWADE, Torsten, 31228 Peine (DE); KONRAD, Peter, 38106 Braunschweig (DE); REVERMANN, Klaus, 38556 Bokensdorf (DE)
(74) Vertreter: Effert, Bressel und Kollegen
(86) Internationale Anmeldenummer: EP0012908
(87) Internationale Veröffentlichungsnummer: WO01047084

(56) Entgegenhaltungen:
- US-A- 3 108 205

## Beschreibung

Die Erfindung betrifft ein Verfahren und eine Vorrichtung zum Überspannungsschutz in Zweispannungsbordnetzen.

Derartige Zweispannungsbordnetze sind beispielsweise aus der Kraftfahrzeugtechnik bekannt. Aufgrund der zunehmenden Anzahl von elektrischen Verbrauchern reicht oftmals eine einzige Spannungsversorgung nicht mehr aus. Des weiteren kommen elektrische Verbraucher zur Anwendung, die entweder eine höhere Betriebsspannung und/oder höhere elektrische Leistungen benötigen, so daß Zweispannungsbordnetze entwickelt wurden, die ein unterschiedliches Spannungsniveau von beispielsweise 14V und 42V aufweisen. Weiter ist es bekannt, diese Bordnetze über einen DC/DC- Wandler zu verbinden, damit diese beispielsweise über einen gemeinsamen Generator versorgbar sind. Prinzipielles Problem derartiger Zweispannungsbordnetze ist, daß die elektrischen Verbraucher im Bordnetz mit dem niedrigen Spannungsniveau gegen statische Überspannungen aufgrund eine Kurzschlusses zwischen den beiden Bordnetzen geschützt werden müssen. Dies kann beispielsweise dadurch erfolgen, daß die elektrischen Verbraucher im Bordnetz mit dem niedrigen Spannungsniveau mit entsprechenden Überspannungschutzelementen, die auf die Spannung im anderen Bordnetz ausgelegt sind, ausgebildet sind. Nachteilig an dieser Vorgehensweise ist, daß somit alle elektrischen Verbraucher, die bisher in Bordnetzen mit einem niedrigen Spannungsniveau eingesetzt wurden, modifiziert werden müßten.

D1 offenbart eine Vorrichtung zum Überspannungsschutz in Zweispannungsbordnetzen, wobei in mindestens einem Zweig des Bordnetzes auf dem höheren Spannungsniveau ein Schalter und im Bordnetz auf dem niedrigen Spannungsniveau eine Spannungsmesseinheit zur Betätigung des Schalters angeordnet ist.

Der Erfindung liegt daher das technische Problem zugrunde, eine Vorrichtung und ein Verfahren zu schaffen, mittels derer einfacher die elektrischen Verbraucher in dem Bordnetz mit dem niedrigeren Spannungsniveau vor Überspannungen aufgrund des anderen Bordnetzes geschützt sind.

Die Lösung des technischen Problems ergibt sich durch die Gegenstände mit den Merkmalen der Patentansprüche 1 und 8. Weitere vorteilhafte Ausgestaltungen der Erfindung ergeben sich aus den Unteransprüchen.

Hierzu wird in mindestens einem Zweig des Bordnetzes auf dem höheren Spannungsniveau ein Schaltelement angeordnet und im Bordnetz auf dem niedrigeren Spannungsniveau eine Spannungsmeßeinheit angeordnet, die bei Erfassung einer Überspannung über das oder die Schaltelemente Spannungszweige im Bordnetz mit dem höheren Spannungsniveau abschalten kann und somit die Ursache für die Überspannung beseitigen kann.

Die Schaltelemente können entweder in allen sicherheitsunkritischen Zweigen angeordnet werden oder nur in den Zweigen, wo aufgrund der Verdrahtung ernstlich die Gefahr von Kurzschlüssen mit dem anderen Bordnetz auftreten kann.

Die Spannungsmeßeinheit kann entweder über Steuerleitungen oder einen CAN- Bus oder andere Bussysteme mit den Schaltelementen verbunden sein.

In einer weiteren bevorzugten Ausführungsform, bei der die beiden Bordnetze über einen DC/DC- Wandler galvanisch miteinander verbunden sind, wird die Spannungsmeßeinheit vorzugsweise in den DC/DC- Wandler integriert.

Die Schaltelemente sind vorzugsweise als Halbleiterschaltelemente, insbesondere als MOS- FET's ausgebildet.

Verfahrensmäßig wird die Spannung im Bordnetz mit dem niedrigeren Spannungsniveau gemessen und bei Erfassung einer Überspannung werden über die Schaltelemente Zweige im Bordnetz mit der höheren Spannung sukzessive abgeschaltet, bis keine Überspannung mehr auftritt.

Insbesondere bei Zweigen, die getrennt voneinander abgesichert werden müssen, wie beispielsweise die linke und rechte Seite der Fahrzeugbeleuchtung werden diese nacheinander abgeschaltet, wobei der eine Zweig erst wieder zugeschaltet wird, bevor der andere abgeschaltet wird, so daß jeweils ein Zweig betriebsbereit bleibt. Tritt nämlich nach Abschaltung des ersten Zweiges die Überspannung weiterhin auf, so ist dieser Zweig nicht die Ursache für die Überspannung, so daß dieser wieder zugeschaltet werden kann.

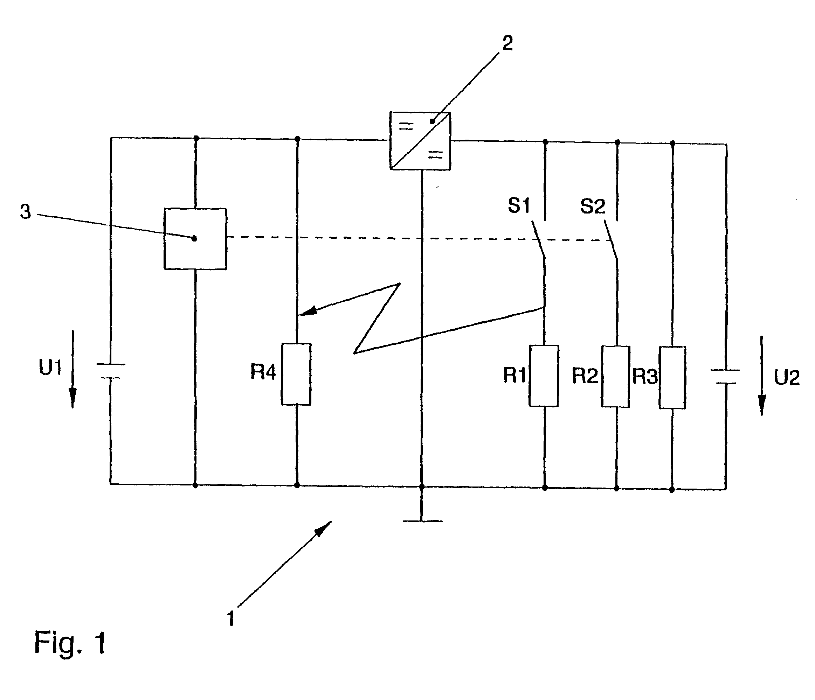

Die Erfindung wird nachfolgend anhand eines bevorzugten Ausführungsbeispieles näher erläutert. Die einzige Figur zeigt einen schematischen Schaltplan eines Zweispannungsbordnetzes mit Überspannungsschutz.

Das Zweispannungsbordnetz 1 umfaßt eine erste Spannungsquelle U1 und eine zweite Spannungsquelle U2, wobei U2 > U1 gilt. Zwischen den beiden Spannungsquellen U1, U2 ist ein DC/DC- Wandler 2 angeordnet, über den die Bordnetze trotz der unterschiedlichen Spannungsniveaus verbindbar sind. In dem ersten Bordnetz mit der Spannungsquelle U1 sind erste elektrische Verbraucher R4 und in dem zweiten Bordnetz mit der Spannungsquelle U2 sind zweite elektrische Verbraucher R1-R3 in verschiedenen Zweigen angeordnet. In dem Zweig der elektrischen Verbraucher R1 und R2 ist jeweils ein Schaltelement S1 bzw. S2 angeordnet. In dem ersten Bordnetz ist eine Spannungsmeßeinheit 3 angeordnet, die die Spannung im ersten Bordnetz mißt. Die Spannungsmeßeinheit 3 ist mit den Steuereingängen der Schaltelemente S1 und S2 verbunden. Die elektrischen Verbraucher R3, in deren Zweig keine Schaltelemente angeordnet sind, sind beispielsweise sicherheitskritische Verbraucher wie eine elektrische Lenkung oder eine elektrische Bremse, die nicht abgeschaltet werden dürfen. Des weiteren müssen in Zweigen, die aufgrund ihrer Anordnung weit vom ersten Bordnetz entfernt sind, keine Schaltelemente angeordnet sein.

Die Spannungsmeßeinheit 3 mißt kontinuierlich die Spannung im ersten Bordnetz. Tritt nun beispielsweise ein Kurzschluß zwischen dem Zweig des Verbrauchers R1 und dem des Verbrauchers R4 auf, so erfaßt die Spannungsmeßeinheit 3 die Überspannung im ersten Bordnetz. Daraufhin schaltet die Spannungsmeßeinheit 3 das erste Schaltelement S1, so daß dieses öffnet bzw. sperrt und den Zweig von R1 abschaltet. Im dargestellten Beispiel ist somit die Ursache für die Überspannung beseitigt.

Ergibt hingegen die Messung der Spannungsmeßeinheit 3, daß noch weiter eine Überspannung auftritt, so wird das nächste Schaltelement S2 geöffnet, bis keine

Überspannung mehr auftritt. Hierbei kann zunächst das zuvor geöffnete Schaltelement S1 wieder geschlossen werden, bevor das Schaltelement S2 geöffnet wird. Diese Vorgehensweise ist insbesondere bei Verbrauchern, die getrennt abgesichert werden müssen vorteilhaft, da jeweils einer der Verbraucher aktiv bleibt.

## Patentansprüche

1. Vorrichtung zum Überspannungsschutz in Zweispannungsbordnetzen, die ein unterschiedliches Spannungsniveau aufweisen, wobei in mindestens einem Zweig des Bordnetzes auf dem höheren Spannungsniveau ein Schaltelement (S1, S2) angeordnet ist und im Bordnetz auf dem niedrigen Spannungsniveau eine Spannungsmeßeinheit (3) angeordnet ist, wobei das Schaltelement (S1, S2) durch die Spannungsmeßeinheit (3) schaltbar ist,
**dadurch gekennzeichnet, daß**
in mindestens zwei Spannungszweigen jeweils ein Schaltelement (S1, S2) angeordnet ist, wobei mittels der Spannungsmeßeinheit (3) sukzessive Spannungszweige abschaltbar sind, wenn im Bordnetz mit dem niedrigeren Spannungsniveau eine Überspannung erfasst wird, solange bis keine Überspannung mehr erfaßbar ist.

2. Vorrichtung nach Anspruch 1, **dadurch gekennzeichnet, daß** in allen sicherheitsunkritischen Zweigen des Bordnetzes auf dem höheren Spannungsniveau ein Schaltelement angeordnet ist.

3. Vorrichtung nach Anspruch 1 oder 2, **dadurch gekennzeichnet, daß** die Spannungsmeßeinheit (3) über ein Bussystem mit den Schaltelementen (S1,S2) verbunden ist.

4. Vorrichtung nach einem der vorangegangenen Ansprüche, **dadurch gekennzeichnet, daß** die beiden Bordnetze über einen DC/DC- Wandler (2) verbunden sind.

5. Vorrichtung nach Anspruch 4, **dadurch gekennzeichnet, daß** die Spannungsmeßeinheit im DC/DC- Wandler (2) integriert ist.

6. Vorrichtung nach einem der vorangegangenen Ansprüche, **dadurch gekennzeichnet, daß** die Schaltelemente (S1,S2) als Halbleiterschaltelemente ausgebildet sind.

7. Vorrichtung nach Anspruch 6, **dadurch gekennzeichnet, daß** die Halbleiterschaltelemente als MOS-FET's ausgebildet sind.

8. Verfahren zum Überspannungsschutz in Zweispannungsbordnetzen (1), die ein unterschiedliches Spannungsniveau aufweisen, umfassend folgende Verfahrensschritte:
a) Messen der Spannung im Bordnetz mit dem niedrigeren Spannungsniveau und
b) sukzessives Abschalten von Spannungszweigen im Bordnetz mit dem höheren Spannungsniveau, wenn im Bordnetz mit dem niedrigeren Spannungsniveau eine Überspannung erfaßt wird, solange bis keine Überspannung mehr erfaßt wird.

9. Verfahren nach Anspruch 8, **dadurch gekennzeichnet, daß** ein abgeschalteter Spannungszweig wieder zugeschaltet wird, falls nach dessen Abschaltung weiterhin eine Überspannung erfaßt wird.

10. Verfahren nach Anspruch 9, **dadurch gekennzeichnet, daß** der abgeschaltete Spannungszweig wieder zugeschaltet wird, bevor der nächste Spannungszweig abgeschaltet wird.

11. Verfahren nach einem der Ansprüche 8 bis 10, **dadurch gekennzeichnet, daß** bestimmte Spannungszweige gleichzeitig abgeschaltet werden und sukzessive wieder zugeschaltet werden.

## Claims

1. Device for overvoltage protection in dual-voltage vehicle electrical systems which have different voltage levels, a switching element (S1, S2) being arranged in at least one branch of the vehicle electrical system at the higher voltage level, and a voltage measuring unit (3) being arranged in the vehicle electrical system at the low voltage level, it being possible to switch the switching element (S1, S2) by means of the voltage measuring unit (3), **characterized in that** one switching element (S1, S2) is arranged in each of at least two voltage branches, it being possible to switch off the voltage branches successively by means of the voltage measuring unit (3) if an overvoltage is sensed in the vehicle electrical system with the lower voltage level until it is no longer possible to sense an overvoltage.

2. Device according to Claim 1, **characterized in that** a switching element is arranged in all the branches of the vehicle electrical system which are not critical for safety, at the higher voltage level.

3. Device according to Claim 1 or 2, **characterized in that** the voltage measuring unit (3) is connected to the switching elements (S1, S2) via a bus system.

4. Device according to one of the preceding claims, **characterized in that** the two vehicle electrical systems are connected via a DC/DC transformer (2).

5. Device according to Claim 4, **characterized in that** the voltage measuring unit is integrated into the DC/DC transformer (2).

6. Device according to one of the preceding claims, **characterized in that** the switching elements (S1, S2) are embodied as semiconductor switching elements.

7. Device according to Claim 6, **characterized in that** the semiconductor switching elements are embodied as MOS-FETs.

8. Method for overvoltage protection in dual-voltage vehicle electrical systems (1) which have different voltage levels, comprising the following method steps:
a) the voltage in the vehicle electrical system with the lower voltage level is measured, and
b) voltage branches in the vehicle electrical system with the higher voltage level are switched off successively if an overvoltage is sensed in the vehicle electrical system with the lower voltage level until it is no longer possible to sense an overvoltage.

9. Method according to Claim 8, **characterized in that** a switched-off voltage branch is switched on again if an overvoltage is still sensed after it has been switched off.

10. Method according to Claim 9, **characterized in that** the switched-off voltage branch is switched on again before the next voltage branch is switched off.

11. Method according to one of Claims 8 to 10, **characterized in that** specific voltage branches are switched off simultaneously and switched on again successively.

## Revendications

1. Dispositif de protection contre les surtensions dans des réseaux de bord à deux tensions qui présentent un niveau de tension différent, un élément de commutation (S1, S2) étant disposé dans au moins une branche du réseau de bord à niveau de tension plus élevé et une unité de mesure de tension (3) étant disposée dans le réseau de bord à niveau de tension plus bas, l'élément de commutation (S1, S2) étant commutable grâce à l'unité de mesure de tension (3),
**aractérisé en ce que**
dans au moins deux branches de tension est disposé respectivement un élément de commutation (S1, S2), des branches de tension successives étant déconnectables au moyen de l'unité de mesure de tension (3) si une surtension est détectée dans le réseau de bord à niveau de tension plus bas jusqu'à ce que plus aucune surtension ne soit détectable.

2. Dispositif selon la revendication 1, **caractérisé en ce que** dans toutes les branches non critiques au niveau sécurité du réseau de bord à niveau de tension plus élevé, un élément de commutation est disposé.

3. Dispositif selon la revendication 1 ou 2, **caractérisé en ce que** l'unité de mesure de tension (3) est reliée par l'intermédiaire d'un système de bus aux éléments de commutation (S1, S2).

4. Dispositif selon l'une quelconque des revendications précédentes, **caractérisé en ce que** les deux réseaux de bord sont reliés par l'intermédiaire d'un transducteur DC/DC (2).

5. Dispositif selon la revendication 4, **caractérisé en ce que** l'unité de mesure de tension est intégrée dans le transducteur DC/DC (2).

6. Dispositif selon l'une quelconque des revendications précédentes, **caractérisé en ce que** les éléments de commutation (S1, S2) se présentent sous forme d'éléments de commutation à semiconducteurs.

7. Dispositif selon la revendication 6, **caractérisé en ce que** les éléments de commutation à semiconducteurs se présentent sous forme de MOS-FET.

8. Procédé de protection contre les surtensions dans des réseaux de bord à deux tensions (1) qui présentent un niveau de tension différent, comprenant les étapes opératoires suivantes :
a) mesure de la tension dans le réseau de bord à niveau de tension plus bas et
b) déconnexion successive des branches de tension dans le réseau de bord à niveau de tension plus élevé si une surtension est détectée dans le réseau de bord à niveau de tension plus bas, jusqu'à ce que plus aucune surtension ne soit détectable.

9. Procédé selon la revendication 8, **caractérisé en ce qu'**une branche de tension déconnectée est reconnectée dans le cas où une surtension est encore détectée après sa déconnexion.

10. Procédé selon la revendication 9, **caractérisé en ce que** la branche de tension déconnectée est reconnectée avant que la branche de tension suivante soit déconnectée.

11. Procédé selon l'une quelconque des revendications 8 à 10, **caractérisé en ce que** certaines branches de tension sont simultanément déconnectées et successivement reconnectées.
